# EUROPÄISCHE PATENTSCHRIFT

(11) **EP 2 038 557 B1**
(45) Veröffentlichungstag und Bekanntmachung des Hinweises auf die Patenterteilung: **19.01.2011**
(21) Anmeldenummer: 07765013.3
(22) Anmeldetag: 03.07.2007
(51) Int. Cl.: F16B 13/06

(54) **SPREIZANKER**
EXPANSION ANCHOR
DISPOSITIF D'ANCRAGE A EXPANSION

(30) Priorität: 07.07.2006 DE 102006031467
(43) Veröffentlichungstag der Anmeldung: 25.03.2009
(73) Patentinhaber: Fischerwerke GmbH & Co. Kg, 72178 Waldachtal (DE)
(72) Erfinder: HAYER, Horst, 72178 Waldachtal (DE); LINKA, Martin, 72160 Horb a.N. (DE); HACKER, Oliver, 72160 Horb a.N (DE); SCHILLINGER, Peter, 72224 Ebhausen (DE); HOFMANN, Jan, 72280 Dornstetten (DE)
(86) Internationale Anmeldenummer: PCT/EP2007/005864
(87) Internationale Veröffentlichungsnummer: WO 2008/003456

(56) Entgegenhaltungen:
- DE-A1- 3 110 485
- DE-A1- 3 226 130
- GB-A- 2 190 164
- US-A- 3 538 808
- US-A- 4 403 734

## Beschreibung

Die Erfindung betrifft einen Spreizanker mit den Merkmalen des Oberbegriffs des Anspruchs 1.

Derartige Spreizanker sind an sich bekannt. Sie weisen einen Schaft mit einem Spreizkörper und eine Spreizhülse auf, die durch Einziehen des Spreizkörpers aufspreizbar ist und dadurch den Spreizanker in einem Bohrloch in einem Ankergrund verankert. Die Spreizhülse kann geschlitzt sein. Der Spreizkörper ist üblicherweise konisch. Gleichzusetzen mit einem Einziehen des Spreizkörpers in die Spreizhülse ist umgekehrt ein Aufschieben der Spreizhülse auf den Spreizkörper.

Die Patentschrift US 3,538,808 zeigt einen derartlgen Spreizanker, auf dessen Schaft ein rohrartiges, elastisches Spreizelement angeordnet ist. Das elastische Spreizelement ist durch axiales Stauchen aufweitbar. Die Spreizhülse wirkt als Axialabstützung für das elastische Spreizelement.

Aufgabe der Erfindung ist, eine Querabstützung des Spreizankers zu verbessern.

Diese Aufgabe wird erfindungsgemäß durch die Merkmale des Anspruchs 1 gelöst. Auf dem Schaft des erfindungsgemäßen Spreizankers ist ein rohrartiges, elastisches Spreizelement angeordnet, das axial stauchbar ist, so dass es sich aufweitet. Der Schaft des erfindungsgemäßen Spreizankers ist ein Gewindebolzen. Das gestauchte und aufgeweitete Spreizelement stützt den Schaft des Spreizankers in radialer Richtung in einem Bohrloch ab. Das Aufspreizen der Spreizhülse und das Aufweiten des Spreizelements können in einem Arbeitsgang erfolgen, so dass der Verankerungsaufwand nicht vergrößert ist. Das elastische Spreizelement bildet eine Mitdrehsicherung, durch seine Elastizität gleicht es eine Bohrlocherweiterung beispielsweise in Folge von Rissblidung aus und es passt sich an eine unregelmäßige Bohrlochwandung an. Insbesondere wenn das elastische Spreizelement nahe einer Bohrlochmündung angeordnet ist, bildet es eine wirksame Querkraftabstützung für den Schaft des Spreizankers. Das Spreizelement weist eine Abdichtwirkung auf. Eine Dauerhaltbarkeit der Verankerung bei dynamischer Beanspruchung des Spreizankers und damit ein seismisches Verhalten ist durch eine Dämpfungswirkung des elastischen Spreizelements verbessert. Zudem sieht die Erfindung eine Axialabstützung in Form einer am schaft ausgebildeten Ringstufe für das Spreizelement vor. Die Axialabstützung ist auf einer der Hülse gegenüberliegenden Seite des Spreizelements angeordnet. Sie stützt das Spreizelement beim Stauchen mit der Hülse ab. Durch die Axialabstützung lässt sich am Schaft des Sprelzankers ein axialer Abstand zwischen der Spreizhülse und dem Spreizelement erzielen.

Vorzugsweise ist auf einer dem Sprelzkörper abgewandten Seite des Spreizelements eine Hülse zum Stauchen des Spreizelements auf dem Schaft angeordnet.

Die Bezeichnung des Spreizelements als "rohrartig" und der Hülse als "Hülse" sind nicht als Beschränkung auf Zylinderformen zu verstehen. Eine Weiterbildung der Erfindung sieht mehrere auf dem Schaft des Spreizankers angeordnete Spreizelemente vor. Die Querabstützung des Schafts ist dadurch verbessert, zusätzlich verbessert sich die Festigkeit der Verankerung gegen Zug. Die einzelnen Spreizelemente können unterschiedliche Härten, Längen oder Oberflächen aufweisen, so dass sie sich an unterschiedlichste Bohriochwandungen optimal anpassen können.

Das Spreizelement kann beispielsweise aus einem gummielastischen Werkstoff bestehen. Eine Ausgestaltung der Erfindung sieht ein technisches Geflecht, Gewebe, Gewirk, Gestrick oder dgl. für das Spreizelement vor, das Spreizelement hat beispielsweise die Form eines Strumpfs oder Schlauchs. Mit "technisch" ist gemeint, dass das Gewebe, Gewirk, Gestrickt oder dgl. nicht aus einem textilen sondern aus einem oder mehreren technischen Faden hergestellt ist. Unter "technischer Faden" sind beispielsweise Kunst-, Glas-, Kohlenstofffasern oder auch ein Metalldraht zu verstehen. Das Spreizelement des erfindungsgemäßen Spreizankers lässt sich dadurch in vielfältiger Weise an Beanspruchungen und Einsatzzwecke anpassen.

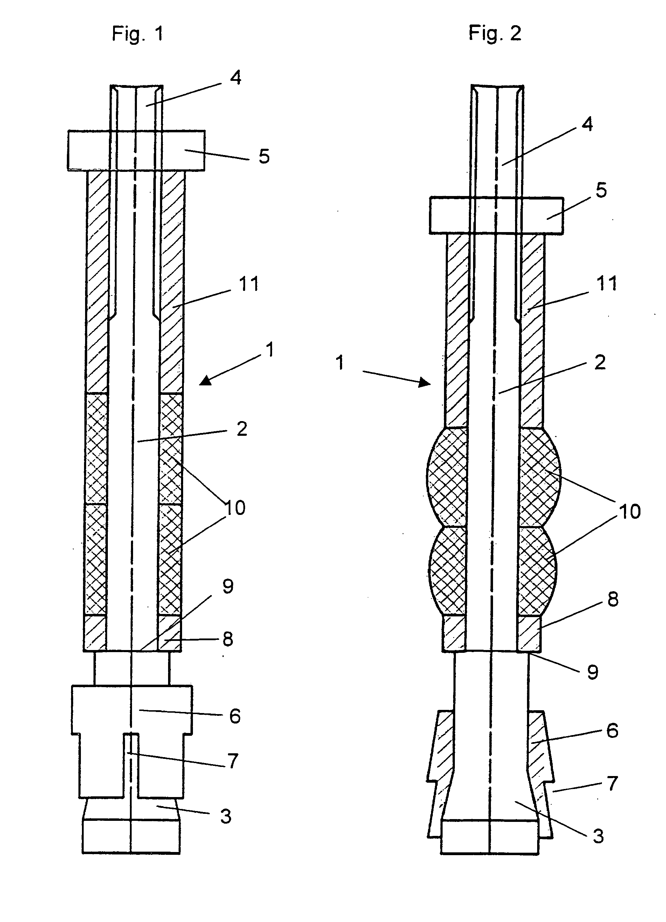

Die Erfindung wird nachfolgend anhand eines in der Zeichnung dargestellten Ausführungsbeispiels näher erläutert. Die beiden Figuren zeigen einen erfindungsgemäßen Spreizanker in Seitenansicht in einem Ausgangszustand (Figur 1) und in einem aufgespreizten Zustand (Figur 2).

Der in Figur 1 dargestellte, erfindungsgemäße Spreizanker 1 weist einen stabförmigen Schaft 2 mit einem konischen Spreizkörper 3 an einem Ende auf. Das andere Ende des Schafts 2 ist mit einem Gewinde 4 versehen, auf das eine Mutter 5 geschraubt ist. Im Anschluss an den Spreizkörper 3 ist eine Spreizhülse 6 auf dem Schaft 2 angeordnet. Die Spreizhülse 6 weist Längsschlitze 7 zu ihrer Aufspreizbarkeit auf, die an einem dem Spreizkörper 3 zugewandten Ende der Spreizhülse 6 offen und am anderen Ende geschlossen sind. Die Spreizhülse 6 ist auf den Spreizkörper 3 aufschiebbar und dadurch aufspreizbar. Ebenso kann der Spreizkörper 3 zum Aufspreizen der Spreizhülse 6 in die Spreizhülse 6 eingezogen werden.

An die Spreizhülse 6 ggf. mit axialem Abstand ist eine Hülse als Distanzelement 8 auf dem Schaft 2 angeordnet. Die Distanzhülse 8 stützt sich an einer Ringstufe 9 axial ab, an der sich der Schaft 2 vom Spreizkörper 3 in Richtung des Gewindes 4 verjüngt. Im Anschluss an das Distanzelement 8 sind zwei rohrartige, elastische Spreizelemente 10 auf dem Schaft 2 angeordnet. Die Spreizelemente 10 können auch als hülsenförmig oder schlauchartig bezeichnet werden. Die Anzahl von zwei Spreizelementen 10 ist nicht zwingend, grundsätzlich kann auch ein Spreizelement 10 genügen oder es können mehr als zwei Spreizelemente 10 vorgesehen sein. Wesentlich ist, dass die Spreizelemente 10 durch axiales Stauchen aufweitbar sind, d.h. dass sie ihren Außenumfang bzw. -durchmesser durch axiales Stauchen vergrößern.

Die Spreizelemente 10 können beispielsweise Rohrstücke aus Gummi oder Kunststoff sein. Im dargestellten und beschriebenen Ausführungsbeispiel der Erfindung sind die Spreizelemente 10 Schläuche aus technischem Geflecht, Gewebe, Gewirk, Gestrick oder dgl. Mit "technisch" ist gemeint, dass Fäden, aus denen das Gewebe, Gewirk, Gestrick oder dgl. hergestellt ist, nicht textil, sondern beispielsweise aus Kunst-, Kohlenstoff-, Glas- oder dgl. -fasern oder auch aus Draht hergestellt sind.

Im Anschluss an die Spreizelemente 10 ist eine Hülse 11 auf dem Schaft 2 des Spreizankers 1 angeordnet.

Zur Verankerung des Spreizankers 1 in einem Bohrloch in einem nicht dargestellten Ankergrund wird der Spreizanker 1 mit dem Spreizkörper 3 voraus in das Bohrloch so tief eingebracht, dass sich zumindest die Spreizelemente 10 im Bohrloch befinden. Die Spreizhülse 7 hält durch Übermaß klemmend im Bohrloch, so dass durch Zug am Gewinde 4 des Schafts 2 des Spreizankers 1 der Spreizkörper 3 in die Spreizhülse 6 eingezogen und die Spreizhülse 6 dadurch aufgespreizt werden kann. Der Spreizanker 1 ist dadurch im Bohrloch verankert.

Durch axialen Druck auf die Hülse 11 beispielsweise durch Aufschrauben einer Mutter 5 auf das Gewinde 4 werden die Spreizelemente 10 axial gestaucht und dadurch wie in Figur 2 zu sehen aufgeweitet. Durch ihre Elastizität passen sich die Spreizelemente 10 auch an eine unregelmäßig geformte Bohrlochwandung an. Die aufgeweiteten Spreizelemente 10 stützen den Schaft 2 in Querrichtung im Bohrloch ab. Um eine gute Querkraftabstützung zu gewährleisten sollte eine axiale Länge des Distanzelements 8 so auf eine Tiefe des Bohrlochs bzw. eine Setztiefe des Spreizankers 1 abgestimmt sein, dass sich das dem Gewinde 4 nahe Spreizelement 10 nahe einer Mündung des Bohrlochs befindet. Außer der Querkraftabstützung bewirken die Spreizelemente 10 einen zusätzlichen Halt des Schafts 2 in axialer Richtung im Bohrloch.

Das Aufspreizen der Spreizhülse 6 und das Aufweiten der Spreizelemente 10 ist in einem Arbeitsschritt vorgesehen, in dem zugleich eine Zugkraft auf den Schaft 2 und eine Druckkraft auf die Hülse 11 ausgeübt wird. Das erfolgt beispielsweise durch Aufschrauben der Mutter 5 auf das Gewinde 4, die sich gegen die Hülse 11 abstützt. Der Spreizanker 1 kann in sog. Durchsteckmontage gesetzt werden, d.h. er wird durch eine Bohrung eines nicht dargestellten, zu befestigenden Bauteils durch und - wie vorstehend beschrieben - in ein Bohrloch gesteckt. Der zu befestigende Gegenstand befindet sich im Bereich der Hülse 11.

## Patentansprüche

1. Spreizanker, mit einem einen Spreizkörper (3) aufweisenden und als Gewindebolzen ausgeführten Schaft (2) und mit einer Spreizhülse (6), die auf dem Schaft (2) verschieblich und durch Einziehen des Spreizkörpers (3) in die Spreizhülse (6) aufspreizbar ist, wobei auf dem Schaft (2) ein rohrartiges, elastisches Spreizelement (10) angeordnet ist, das durch axiales Stauchen aufweitbar ist, und wobei der Spreizanker (1) eine Axialabstützung (9) für das Spreizelement (10) auf einer dem Spreizkörper (3) zugewandten Seite des Spreizelements (10) aufweist, **dadurch gekennzeichnet, dass** die Axialabstützung (9) eine am Schaft (2) ausgebildete Ringstufe ist.

2. Spreizanker nach Anspruch 1, **dadurch gekennzeichnet, dass** auf einer dem Spreizkörper (3) abgewandten Seite des Spreizelements (10) eine Hülse (11) zum axialen Stauchen des Spreizelements (10) auf dem Schaft (2) angeordnet ist.

3. Spreizanker nach Anspruch 1, **dadurch gekennzeichnet, dass** der Spreizanker (1) mehrere auf dem Schaft (2) angeordnete Spreizelemente (10) aufweist.

4. Spreizanker nach Anspruch 1, **dadurch gekennzeichnet, dass** der Spreizanker (1) ein Distanzelement (8) aufweist, das zwischen der Spreizhülse (6) und dem Spreizelement (10) auf dem Schaft (2) angeordnet ist und über das sich das Spreizelement (10) axial an der Axialabstützung (9) abstützt.

5. Spreizanker nach Anspruch 1, **dadurch gekennzeichnet, dass** das Spreizelement (10) ein technisches Geflecht, Gewebe, Gewirk, Gestrick oder dgl. aufweist.

## Claims

1. Expansible anchor having a shank (2), which is in the form of a threaded bolt and which has an expander body (3), and having an expansion sleeve (6), which is displaceable on the shank (2) and arranged to be expanded as a result of the expander body (3) being drawn into the expansion sleeve (6), wherein there is arranged on the shank (2) a tube-like resilient expansion element (10), which is arranged to be widened out as a result of axial compression, and wherein the expansible anchor (1) has an axial support (9) for the expansion element (10) on the side of the expansion element (10) which faces the expander body (3), **characterised in that** the axial support (9) is an annular step constructed on the shank (2).

2. Expansible anchor according to claim 1, **characterised in that** a sleeve (11) for axial compression of the expansion element (10) is arranged on the shank (2), on the side of the expansion element (10) which is remote from the expander body (3).

3. Expansible anchor according to claim 1, **characterised in that** the expansible anchor (1) has a plurality of expansion elements (10) arranged on the shank (2).

4. Expansible anchor according to claim 1, **characterised in that** the expansible anchor (1) has a spacer element (8), which is arranged on the shank (2), between the expansion sleeve (6) and the expansion element (10), and by way of which the expansion element (10) supports itself axially against the axial support (9).

5. Expansible anchor according to claim 1, **characterised in that** the expansion element (10) comprises a technical braided, woven, warp-knitted or weft-knitted material or the like.

## Revendications

1. Dispositif d'ancrage par expansion, comprenant une tige (2) munie d'un corps de déploiement (3) et réalisée sous la forme d'un axe fileté, et une douille expansible (6) pouvant coulisser sur ladite tige (2) et pouvant être déployée par enfoncement dudit corps de déploiement (3) dans ladite douille expansible (6), un élément expansible (10) de type tubulaire, doué d'élasticité et placé sur ladite tige (2), pouvant être élargi par refoulement axial, et ledit dispositif (1) d'ancrage par expansion étant pourvu, sur un côté de l'élément expansible (10) tourné vers ledit corps de déploiement (3), d'un appui axial (9) destiné audit élément expansible (10), **caractérisé par le fait que** l'appui axial (9) est un gradin annulaire façonné sur la tige (2).

2. Dispositif d'ancrage par expansion selon la revendication 1, **caractérisé par le fait qu'**un fourreau (11) est implanté sur la tige (2), d'un côté de l'élément expansible (10) tourné à l'opposé du corps de déploiement (3), en vue du refoulement axial dudit élément expansible (10).

3. Dispositif d'ancrage par expansion selon la revendication 1, **caractérisé par le fait que** ledit dispositif (1) d'ancrage par expansion comprend plusieurs éléments expansibles (10) placés sur la tige (2).

4. Dispositif d'ancrage par expansion selon la revendication 1, **caractérisé par le fait que** ledit dispositif (1) d'ancrage par expansion comporte un élément d'espacement (8) qui est interposé entre la douille expansible (6) et l'élément expansible (10), sur la tige (2), et par l'intermédiaire duquel ledit élément expansible (10) prend axialement appui contre l'appui axial (9).

5. Dispositif d'ancrage par expansion selon la revendication 1, **caractérisé par le fait que** l'élément expansible (10) présente un tressage, un tissé, un maillé, un tricot ou un élément similaire obtenu par des moyens techniques.
